# EUROPEAN PATENT APPLICATION

(11) **EP 4 468 439 A1**
(43) Date of publication of application: **27.11.2024**
(21) Application number: 22922360.7
(22) Date of filing: 09.12.2022
(51) Int. Cl.: H01M 10/0565, H01M 10/052, H01M 4/525

(54) **RECHARGEABLE LITHIUM BATTERY INCLUDING GEL POLYMER ELECTROLYTE**

(30) Priority: 18.01.2022 KR 20220007460
(71) Applicant: SAMSUNG SDI CO., LTD., Giheung-gu Yongin-si, Gyeonggi-do 17084 (KR); IUCF-HYU (INDUSTRY-UNIVERSITY COOPERATION FOUNDATION HANYANG UNIVERSITY), Seoul 04763 (KR)
(72) Inventor: BAE, Woo Jin, Yongin-si, Gyeonggi-do 17084 (KR); WAKITA, Shinya, Yongin-si, Gyeonggi-do 17084 (KR); LEE, Kang Hee, Yongin-si, Gyeonggi-do 17084 (KR); LEE, Junyong, Yongin-si, Gyeonggi-do 17084 (KR); MOON, Jongseok, Yongin-si, Gyeonggi-do 17084 (KR); PARK, Jongseok, Yongin-si, Gyeonggi-do 17084 (KR); PARK, Jinhwan, Yongin-si, Gyeonggi-do 17084 (KR); WOO, Hyunsik, Yongin-si, Gyeonggi-do 17084 (KR); KIM, Heemin, Yongin-si, Gyeonggi-do 17084 (KR); PYO, Su-Jin, Seoul 02157 (KR); BAN, A-Hyeon, Seoul 05021 (KR); KIM, Dong-Won, Seoul 06219 (KR)
(74) Representative: Michalski Hüttermann & Partner Patentanwälte mbB
(86) International application number: PCT/KR2022/020011
(87) International publication number: WO 2023/140503

(57) **Abstract**

Disclosed is a rechargeable lithium battery including a positive electrode, a negative electrode, a separator between the positive electrode and the negative electrode, and a gel polymer electrolyte, wherein the positive electrode includes a positive electrode active material including a lithium cobalt-based oxide; the gel polymer electrolyte includes a polymer and an electrolyte solution; the polymer has three or more functional groups but not include an ether group; the electrolyte includes a lithium salt and a solvent; and the lithium slat includes lithium difluoro(oxalato)borate and LiBF₄.

## Description

### [Technical Field]

A rechargeable lithium battery including a gel polymer electrolyte is disclosed.

### [Background Art]

Rechargeable lithium batteries are widely used as a medium- to large-sized power source for power tools, electric bicycles, electric cars, hybrid electric vehicles, and the like as well as a portable power source for mobile phones, laptop computers, digital cameras, and the like.

However, conventional rechargeable lithium batteries, into which liquid electrolytes are injected, have safety issues such as explosion or firing, when exposed to abnormal conditions such as penetration, impact, or pressurization or when overheated. Accordingly, in order to secure safety, attempts are being made to apply semisolid electrolytes or solid electrolytes instead of the liquid electrolytes. Among them, gel polymer electrolytes (GPE), which are gel-like semi-solid electrolytes prepared by including a liquid electrolyte in a polymer solid electrolyte, may be formed into a free standing film and then, inserted into a battery case or injected in a liquid form into the battery case but later, cured into a gel-type electrolyte. The gel polymer electrolytes have an advantage of significantly improving safety but a problem of increasing resistance and thus decreasing capacity, compared to the liquid electrolytes.

### [Disclosure]

### [Technical Problem]

Provided is a rechargeable lithium battery still using a conventional process by applying a gel polymer electrolyte injectable into a battery case without deteriorating viscosity but exhibiting improved cycle-life characteristics as well as significantly enhanced safety. In addition, provided is a rechargeable lithium battery to which a positive electrode active material including a lithium cobalt-based oxide is applied and which is stably driven without electrolyte decomposition at a high voltage.

### [Technical Solution]

In an embodiment, a rechargeable lithium battery includes a positive electrode, negative electrode, and a separator between the positive electrode and the negative electrode, and a gel polymer electrolyte, wherein the positive electrode includes a positive electrode active material including a lithium cobalt-based oxide, the gel polymer electrolyte includes a polymer and an electrolyte solution; the polymer has three or more functional groups but not include an ether group, the electrolyte includes a lithium salt and a solvent, and the lithium salt includes lithium difluoro(oxalato)borate and LiBF₄.

### [Advantageous Effects]

A rechargeable lithium battery according to an embodiment includes a gel polymer electrolyte and may exhibit significantly improved safety simultaneously, improved cycle-life characteristics. The gel polymer electrolyte may be injected into a battery case without viscosity deterioration and thus have an advantage of being applied to a conventional process, and in addition, even when a lithium cobalt oxide is applied to the positive electrode active material, there is no problem of causing a chemical reaction or being decomposed at a high voltage, resultantly securing stable battery operation.

### [Description of the Drawings]

FIG. 1 is a cross-sectional view schematically showing a rechargeable lithium battery.
FIG. 2 is a ¹H NMR analysis graph for the gel polymer electrolyte prepared in Example 1.
FIG. 3 is a graph showing the cycle-life characteristics of the battery cells of Example 1 and Comparative Example 1.
FIG. 4 is a graph showing cycle-life characteristics of the battery cells of Example 1, Example 2, and Comparative Example 2.
FIG. 5 is a graph showing the cycle-life characteristics of the battery cells of Example 1, Comparative Example 3, and Comparative Example 4.
FIG. 6 is a graph showing the cycle-life characteristics of the battery cells of Example 1, Example 3, and Example 4.
FIG. 7 is a graph showing the viscosity of the gel polymer electrolyte composition according to the polymer content.

### [Mode for Invention]

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

In addition, the average particle diameter and the average size may be measured by a method well known to those skilled in the art, for example, may be measured by a particle size analyzer, or may be measured by a transmission electron microscope photograph or a scanning electron microscope photograph. Alternatively, it is possible to obtain an average particle diameter value by measuring a size using a dynamic light scattering method, performing data analysis, counting the number of particles for each particle size range, and calculating from this. As used herein, when a definition is not otherwise provided, the average particle diameter may be may mean a diameter (D50) of particles measured by a particle size analyzer and having a cumulative volume of 50 volume% in the particle size distribution.

### Rechargeable Lithium Battery

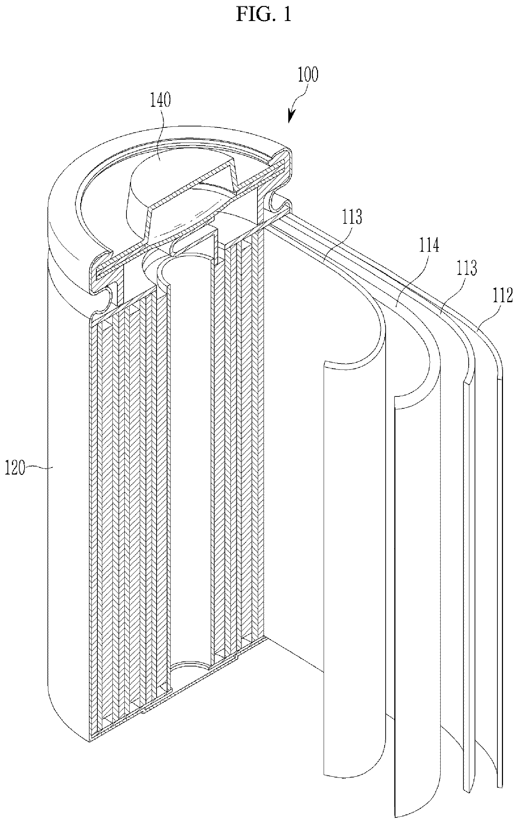

In an embodiment, a rechargeable lithium battery includes a positive electrode, a negative electrode, a separator between the positive electrode and the negative electrode, and a gel polymer electrolyte. FIG. 1 is a schematic view showing a rechargeable lithium battery according to an embodiment. Referring to FIG. 1, the rechargeable lithium battery 100 includes a battery cell including positive electrode 114, a negative electrode 112 facing the positive electrode 114, and a separator 113 between the positive electrode 114 and the negative electrode 112, and a gel polymer electrolyte (not shown) impregnating the positive electrode 114, the negative electrode 112, and the separator 113, a battery container 120 housing the battery cell, and a sealing member 140 that seals the battery container 120.

### Gel Polymer Electrolyte

The gel polymer electrolyte according to an embodiment includes a polymer and an electrolyte solution, wherein the polymer has three or more functional groups but not include an ether group, the electrolyte includes a lithium salt and a solvent, and the lithium salt includes lithium difluoro(oxalato)borate and LiBF₄.

The gel polymer electrolyte may be manufactured in a method of injecting it into a battery case after inserting an electrode assembly thereinto and thus have an advantage of being applicable to a conventional non-aqueous electrolyte battery manufacturing process. In addition, the gel polymer electrolyte may maintain low viscosity, when injected into the battery case, and thus maintain satisfactory processability. The gel polymer electrolyte may be easily cured by heat or light and thus become solid in the form of a gel. In the rechargeable lithium battery, the gel polymer electrolyte may be expressed to include a crosslinked polymer or a cured polymer with an electrolyte.

The polymer included in the gel polymer electrolyte has 3 or more functional groups and thus may be advantageously crosslinked and cured in the battery case and exhibit excellent cycle-life characteristics, compared to a battery to which a polymer having 2 or less functional groups is applied. In addition, the polymer may be a multifunctional polymer including no ether group. If a lithium cobalt-based oxide is applied as a positive electrode active material, an ether group in the electrolyte has a chemical reaction at a high voltage of 4.4 V or so and tends to be decomposed. On the other hand, a polymer in the gel polymer electrolyte according to an embodiment, which is a multifunctional polymer including no ether group, even if the lithium cobalt-based oxide is applied to the positive electrode active material, may not be decomposed or have no chemical reaction but secure long-term operation of the rechargeable lithium battery. A rechargeable lithium battery according to an embodiment may realize excellent cycle-life characteristics, compared to a battery to which a gel polymer electrolyte including an ether-based multifunctional polymer is applied.

The functional group in the polymer may be, for example, an ester group (-C(=O)O-), a carbonate group (-OC(=O)O-), or a combination thereof. Accordingly, the polymer may be expressed as an ester-based multifunctional polymer or a carbonate-based multifunctional polymer. The gel polymer electrolyte may include a polymer that includes three or more functional groups selected from an ester group and a carbonate group and does not include an ether group, thereby improving processability, ensuring the safety of rechargeable lithium batteries, and improving cycle-life characteristics dramatically.

The polymer may be derived from a compound including three or more carbon-carbon double bonds. In other words, the polymer can be understood as a polymerized, crosslinked, or cured product of the compound including three or more carbon-carbon double bonds. The compound including three or more carbon-carbon double bonds may be, for example, a compound including three or more acrylic groups (CH₂=CH-C(=O)O-). The carbon-carbon double bonds in the polymer participate in reactions such as polymerization or crosslinking during the curing process of the gel polymer electrolyte in the battery case, and may not be detected in the final battery. In the cured gel polymer electrolyte state, it can be detected as an ester group or carbonate group.

The polymer may be, for example, derived from trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, or a combination thereof.

The polymer may be included in an amount of 1 wt% to 10 wt%, for example 2 wt% to 8 wt%, 2 wt% to 6 wt%, or 3 wt% to 5 wt% based on 100 wt% of the gel polymer electrolyte. If this amount range is satisfied, a gel-type polymer electrolyte can be effectively prepared and the cycle-life characteristics of a rechargeable lithium battery can be improved.

In the gel polymer electrolyte, a weight ratio of the polymer and the electrolyte solution may be 1:99 to 10:90, for example, 2:98 to 8:92, 2:98 to 6:94, or 3:97 to 5. :95. If this weight ratio is satisfied, a gel-type polymer electrolyte can be effectively prepared and the cycle-life characteristics of a rechargeable lithium battery can be improved.

In the gel polymer electrolyte, the electrolyte solution includes a lithium salt and a solvent. The lithium salt includes lithium difluoro(oxalato)borate (LiDFOB) and lithium tetrafluoroborate (LiBF₄). The gel polymer electrolyte can dramatically improve cycle-life characteristics by including the above two types of lithium salts in the electrolyte solution. The gel polymer electrolyte according to an embodiment can implement superior cycle-life characteristics compared to the case where it does not include any of the two types of lithium salts.

In the electrolyte solution, LiDFOB and LiBF₄ may be included in a molar ratio of 20:80 to 80:20, for example, 30:70 to 70:30, or 40:60 to 60:40. By including the lithium salts in this molar ratio, the cycle-life characteristics of a rechargeable lithium battery can be improved.

The electrolyte may further include other lithium salts in addition to LiDFOB and LiBF₄. The other lithium salt may include, for example, LiPF₆, LiSbF₆, LiAsF₆, LiN(SO₂C₂F₅)₂, Li(CF₃SO₂)₂N, LiN(SO₃C₂F₅)₂, lithium bisfluorosulfonylimide (LiFSI), LiC₄F₉SO₃, LiClO₄, LiAlO₂, LiAlCl₄, LiPO₂F₂, lithium difluorobisoxalato phosphate, LiCl, Lil, lithium bis(oxalato)borate (LiBOB), or a combination thereof.

A concentration of the lithium salt in the electrolyte solution may be 0.3 M to 4 M, for example, 0.6 M to 3 M, 0.8 M to 2.5 M, or 1.0 M to 2.0 M. If the concentration of lithium salt satisfies this range, the gel polymer electrolyte can exhibit excellent lithium conductivity, maintain an appropriate concentration when injected into the battery case, and effectively maintain the gel form after curing.

In the electrolyte solution, the solvent may be a solvent used in general non-aqueous electrolyte solution, and for example, may be a carbonate-based solvent, an ester-based solvent, or a combination thereof. Additionally, the solvent may not include an ether-based solvent. When applying lithium cobalt-based oxide as a positive electrode active material, there may be a problem that the ether-based component in the electrolyte solution decomposes in the high voltage range, so that the electrolyte solution of the gel polymer electrolyte according to an embodiment can be designed to not include an ether-based solvent.

The carbonate-based solvent may be for example dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or a combination thereof.

The ester-based solvent may be for example methyl acetate, ethyl acetate, n-propyl acetate, dimethylacetate, methylpropionate, ethylpropionate, γ-butyrolactone, decanolide, valerolactone, mevalonolactone, caprolactone, or a combination thereof.

When using a mixture of two or more types of solvents for the electrolyte solution, the mixing ratio can be appropriately adjusted depending on the desired battery performance. As the carbonate-based solvent, for example, a mixture of cyclic carbonate and chain carbonate can be used. In this case, the cyclic carbonate and chain carbonate can be mixed at a volume ratio of about 1:1 to about 1:9.

Meanwhile, the solvent of the electrolyte solution may include fluoroethylene carbonate. In this case, the gel polymer electrolyte can achieve excellent cycle-life characteristics while maintaining good processability. At this time, the fluoroethylene carbonate may be included in an amount of 5 volume% to 50 volume%, for example 5 volume% to 40 volume%, 10 volume% to 50 volume%, 15 volume% to 50 volume%, or 20 volume% to 40 volume% based on 100 volume% of the solvent. Within the above range, the cycle-life characteristics of a rechargeable lithium battery including the gel polymer electrolyte can be improved.

The solvent of the electrolyte solution may further include an ethylene carbonate-based compound other than fluoroethylene carbonate, or may further include an aromatic hydrocarbon-based organic solvent.

The ethylene-based carbonate-based compound may be, for example, difluoroethylene carbonate, chloroethylene carbonate, dichloroethylene carbonate, bromoethylene carbonate, dibromoethylene carbonate, nitroethylene carbonate, cyanoethylene carbonate, or a combination thereof.

The aromatic hydrocarbon-based solvent may be, for example, benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

### Positive Electrode

The positive electrode 114 includes a current collector and a positive electrode active material layer on the current collector. The positive electrode active material layer may include a positive electrode active material and may optionally include a binder and/or a conductive material. Herein, the current collector may be, for example, aluminum foil, but is not limited thereto.

The positive electrode active material according to an embodiment includes lithium cobalt-based oxide. The lithium cobalt-based oxide refers to an oxide including lithium and cobalt and optionally further including other elements. The lithium cobalt-based oxide can achieve high capacity while exhibiting excellent efficiency and cycle-life characteristics and is economical. The lithium cobalt-based oxide and the aforementioned gel polymer electrolyte can maintain structural stability without causing a chemical reaction with each other, decomposition, or deterioration even during battery operation or under abnormal conditions. When applying the gel polymer electrolyte according to an embodiment while using lithium cobalt-based oxide as a positive electrode active material, battery performance, such as cycle-life characteristics, can be maximized.

For example, the lithium cobalt-based oxide may be represented by Chemical Formula 1.

[Chemical Formula 1] LiₐCoₓM¹_{y}M²_{1-x-y}O₂

In Chemical Formula 1, 0.9 ≤ a ≤ 1.8, 0.7 ≤ x ≤ 1, 0 ≤ y ≤ 0.3, and M¹ and M² are each independently Al, B, Ba, Ca, Ce, Cr, Cu, F, Fe, Mg, Mn, Mo, Nb, P, S, Si, Sr, Ti, V, W, Zr, or a combination thereof.

In Chemical Formula 1, 0.8 ≤ x ≤ 1, 0 ≤y ≤ 0.2, 0.9 ≤ x ≤ 1, 0 ≤ y ≤ 0.1, 0.92 ≤ x ≤ 1, 0 ≤ y ≤ 0.08, or 0.95 ≤ x ≤ 1, 0 ≤ y ≤ 0.05.

The positive electrode active material may further include a coating layer on the surface of the lithium cobalt-based oxide. This coating layer may include at least one coating element compound selected from an oxide of the coating element, a hydroxide of the coating element, an oxyhydroxide of the coating element, an oxycarbonate of the coating element, and a hydroxycarbonate of the coating element. The compound forming the coating layer may be amorphous or crystalline. The coating element included in the coating layer may include Al, As, B, Ca, Co, Ga, Ge, K, Mg, Na, Si, Sn, Ti, V, Zr, or a combination thereof. The compound forming the coating layer may be, for example, lithium-metal oxide, lithium-metal hydroxide, and/or lithium-metal carbonate. As an example, the coating layer may include lithium zirconium oxide. The coating layer formation process may use a method that do not adversely affect the physical properties of the positive electrode active material, such as spray coating, dipping, dry coating, atomic vapor deposition, or evaporation.

The average particle diameter (D50) of the positive electrode active material may be 1 µm to 25 µm, for example, 4 µm to 25 µm, 5 µm to 20 µm, 8 µm to 20 µm, or 10 µm to 18 µm. A positive electrode active material having this particle size range can be harmoniously mixed with other components within the positive electrode active material layer and can achieve high capacity and high energy density. The average particle diameter is measured with a particle size analyzer and may mean a diameter (D50) of particles with a cumulative volume of 50 volume% in the particle size distribution.

The positive electrode active material may be in the form of secondary particles made by agglomerating a plurality of primary particles, or may be in the form of a single crystal. Additionally, the positive electrode active material may be spherical or close to a spherical shape, or may be polyhedral or irregular.

The positive electrode active material may be included in an amount of 55 wt% to 99.8 wt%, for example 80 wt% to 90 wt% based on a total weight of the positive electrode active material layer. Within the above range, the capacity of the rechargeable lithium battery can be maximized and cycle-life characteristics can be improved.

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

An amount of the binder in the positive electrode active material layer may be approximately 0.1 wt% to 5 wt% based on a total weight of the positive electrode active material layer.

The conductive material is included to provide electrode conductivity and any electrically conductive material may be used as a conductive material unless it causes a chemical change in a battery, and examples of the conductive material include a carbon-based material such as natural graphite, artificial graphite, carbon black, acetylene black, ketjen black, a carbon fiber, a carbon nanofiber, carbon nanotube, and the like; a metal-based material of a metal powder or a metal fiber including copper, nickel, aluminum silver, and the like; a conductive polymer such as a polyphenylene derivative; or a mixture thereof. An amount of the conductive material in the positive electrode active material layer may be 0.1 wt% to 5 wt% based on a total weight of the positive electrode active material layer.

### Negative Electrode

In a rechargeable lithium battery, the negative electrode 112 includes a current collector and a negative electrode active material layer on the current collector. The negative electrode active material layer includes a negative electrode active material and may further include a binder and/or a conductive material.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0<x<2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, but not Si), and the Sn-based negative electrode active material may be Sn, SnO₂, a Sn-R alloy (wherein R is an alkali metal, an alkaline-earth metal, a Group 13 element, a Group 14 element, a Group 15 element, a Group 16 element, a transition metal, a rare earth element, and a combination thereof, but not Sn). At least one of these may be mixed with SiO₂. The elements Q and R may include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

For example, the silicon-carbon composite may be a silicon-carbon composite including a core including crystalline carbon and silicon particles and an amorphous carbon coating layer on the surface of the core. The crystalline carbon may be artificial graphite, natural graphite, or a combination thereof. A precursor of the amorphous carbon may be coal-based pitch, mesophase pitch, petroleum-based pitch, coal-based oil, petroleum-based heavy oil, or polymer resin such as phenol resin, furan resin, and polyimide resin. At this time, an amount of silicon may be 10 wt% to 50 wt% based on a total weight of the silicon-carbon composite. In addition, the amount of the crystalline carbon may be 10 wt% to 70 wt% based on a total weight of the silicon-carbon composite, and the amount of the amorphous carbon may be 20 wt% to 40 wt% based on a total weight of the silicon-carbon composite. Additionally, a thickness of the amorphous carbon coating layer may be 5 nm to 100 nm. The average particle diameter (D50) of the silicon particles may be 10 nm to 20 µm. The average particle diameter (D50) of the silicon particles may desirably be 10 nm to 200 nm. The silicon particles may exist in an oxidized form, and in this case, the atomic content ratio of Si:O in the silicon particles, which indicates a degree of oxidation, may be 99:1 to 33:67. The silicon particles may be SiOₓ particles, and in this case, the x range in SiOₓ may be greater than 0 and less than 2.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of 1:99 to 90:10.

An amount of the negative electrode active material in the negative electrode active material layer may be 95 wt% to 99 wt% based on a total weight of the negative electrode active material layer.

In an embodiment, the negative electrode active material layer further includes a binder and, optionally, may further include a conductive material. An amount of the binder in the negative electrode active material layer may be 0.1 wt% to 5 wt% based on a total weight of a negative electrode active material layer. In addition, when a conductive material is further included, the negative electrode active material layer may include 90 wt% to 99.8 wt% of the negative electrode active material, 0.1 wt% to 5 wt% of the binder, and 0.1 wt% to 5 wt% of the conductive material.

The binder serves to well adhere the negative electrode active material particles to each other and also to adhere the negative electrode active material to the current collector. The binder may be a water-insoluble binder, a water-soluble binder, or a combination thereof.

The water-insoluble binder may be polyvinylchloride, carboxylated polyvinylchloride, polyvinylfluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

Examples of the water-soluble binder may include a rubber binder or a polymer resin binder. The rubber-based binder may be selected from a styrene-butadiene rubber, an acrylated styrene-butadiene rubber, an acrylonitrile-butadiene rubber, an acrylic rubber, a butyl rubber, a fluorine rubber, and a combination thereof. The polymer resin binder may be polyethylene oxide, polyvinylpyrrolidone, polyepichlorohydrin, polyphosphazene, polyacrylonitrile, an ethylene propylene diene copolymer, polyvinylpyridine, chlorosulfonated polyethylene, latex, a polyester resin, an acrylic resin, a phenol resin, an epoxy resin, polyvinyl alcohol, and a combination thereof.

When a water-soluble binder is used as the negative electrode binder, it may further include a cellulose-based compound capable of imparting viscosity. The cellulose-based compound may be one or more types of carboxymethyl cellulose, hydroxypropylmethyl cellulose, methyl cellulose, or an alkali metal salt thereof. The alkali metal may be Na, K, or Li. An amount of the thickener used may be 0.1 to 3 parts by weight based on 100 parts by weight of the negative electrode active material.

The conductive material is included to provide electrode conductivity and any electrically conductive material may be used as a conductive material unless it causes a chemical change, and examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

The negative electrode current collector may be selected from a copper foil, a nickel foil, a stainless steel foil, a titanium foil, a nickel foam, a copper foam, a polymer substrate coated with a conductive metal, and a combination thereof.

### Separator

The separator 113 separates a positive electrode 114 and a negative electrode 112 and provides a transporting passage for lithium ions and may be any generally-used separator in a lithium ion battery. In other words, it may have low resistance to ion transport and excellent impregnation for an electrolyte. For example, it may include, for example, glass fiber, polyester, polyethylene, polypropylene, polytetrafluoroethylene, or a combination thereof, and may be in the form of a non-woven or woven fabric. For example, in a lithium ion battery, a polyolefin-based polymer separator such as polyethylene and polypropylene may be mainly used. In order to ensure the heat resistance or mechanical strength, a coated separator including a ceramic component or a polymer material may be used. Optionally, it may have a mono-layered or multi-layered structure.

Meanwhile, in an embodiment, a method of manufacturing a rechargeable lithium battery includes preparing a polymer precursor having three or more functional groups including a carbon-carbon double bonds but not including an ether group is prepared; preparing an electrolyte solution including a lithium salt including lithium difluoro(oxalato)borate and LiBF₄ and a solvent; mixing the polymer precursor and the electrolyte solution to prepare a gel polymer electrolyte composition; inserting an electrode assembly including a positive electrode including a positive electrode active material including lithium cobalt-based oxide, a separator, and a negative electrode into the battery case; injecting the gel polymer electrolyte composition into the battery case; and curing the gel polymer electrolyte composition to obtain a rechargeable lithium battery including a gel polymer electrolyte.

The description of each configuration is the same as described above. The curing of the gel polymer electrolyte composition may be, for example, thermal curing, and the thermal curing may be performed at, for example, 50 °C to 200 °C for 10 minutes to 5 hours.

### DETAILED DESCRIPTION OF THE EMBODIMENTS

Hereinafter, examples and comparative examples of the present invention will be described. The following examples are only examples of the present invention, and the present invention is not limited to the following examples.

### Example 1

### 1. Preparation of Gel Polymer Electrolyte Composition

As a polymer precursor, trimethylolpropane trimethacrylate (TMPTMA) is prepared. An electrolyte (total 1.2 M) is prepared by dissolving lithium difluoro(oxalato)borate (LiDFOB) and LiBF₄ respectively at a concentration of 0.6 M in a solvent of fluoroethylene carbonate (FEC) and diethyl carbonate (DEC) mixed in a volume ratio of 1:2 as an electrolyte component.

The prepared electrolyte and the polymer precursor are mixed in a weight ratio of 97:3 to prepare a gel polymer electrolyte composition.

### 2. Manufacturing of Battery Cells

96 wt% of a Li_{1.02}Co_{0.9823}Al_{0.0127}Mg_{0.005}O₂ positive electrode active material, 2 wt% of a polyvinylidene fluoride binder, 2 wt% of a carbon nanotube conductive material, and an N-methylpyrrolidone solvent are mixed with a mixer to prepare a positive electrode active material layer composition, and the positive electrode active material layer composition is coated on an aluminum foil and then, dried and compressed, manufacturing a positive electrode.

Subsequently, a separator with a polyethylene polypropylene multi-layer structure is interposed between the prepared positive electrode and a lithium metal counter electrode, preparing an electrode assembly. This electrode assembly is inserted into a pouch-type battery case, and the prepared gel polymer electrolyte composition is injected into the case and then, heat-treated at 70 °C for 3 hours to cure the electrolyte composition, manufacturing a half-cell in which a gel polymer electrolyte is formed.

### Evaluation Example 1: ¹H NMR Evaluation

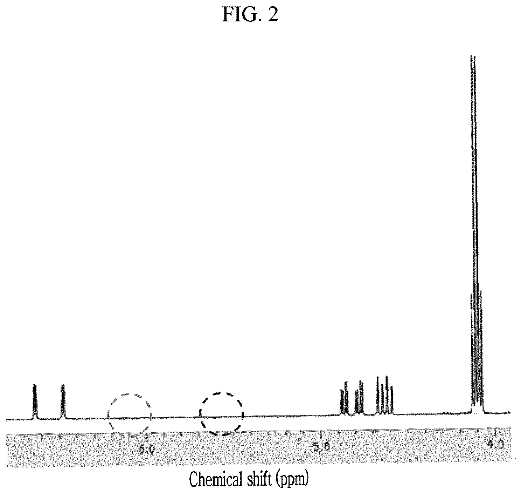

The gel polymer electrolyte cured in Example 1 is subjected to ¹H NMR analysis, and the result is shown in FIG. 2. Referring to FIG. 2, a carbon-carbon double bond peak, which is indicated by a dotted line circle, is confirmed to disappear. Through this, the carbon-carbon double bond of the polymer precursor all participates in a reaction during the curing. In other words, the polymer precursor of the electrolyte composition is 100% converted into a type of crosslinked polymer.

### Comparative Example 1 (ether-based polymer)

A gel polymer electrolyte composition and a battery cell are manufactured in the same manner as in Example 1 except that trimethylolpropane ethoxylate triacrylate (ETPTA), a trifunctional compound including an ether group, is used as the polymer precursor of the gel polymer electrolyte composition.

### Evaluation Example 2: Evaluation of Cycle-life Characteristics

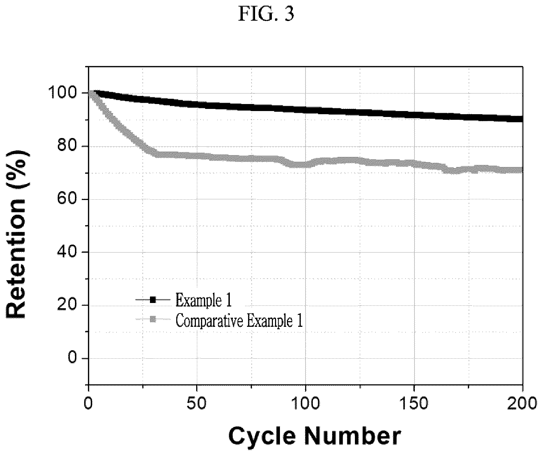

The battery cells of Example 1 and Comparative Example 1 are charged to an upper voltage limit of 4.25 V at a constant current of 0.1 C and discharged to a cut-off voltage of 3.5 V at a constant current of 0.1 C at 25 °C for initial charge and discharge. Subsequently, the cells are 200 times repeatedly charged and discharged within a voltage range of 3.5 V to 4.25 V at 0.5 C. The cells are measured with respect to discharge capacity to calculate a ratio of discharge capacity at each cycle to initial discharge capacity during the 200 cycles, which is evaluated as capacity retention, and the results are shown in FIG. 3.

Referring to FIG. 3, in Comparative Example 1 to which an ether-based polymer is applied, the capacity retention decreases from the beginning of the cycles and reaches a retention rate of 70% at the 200 cycles, but Example 1 exhibits capacity retention of 90% at the 200^{th} cycle and thus excellent cycle-life characteristics.

### Example 2 (Change of Polymer)

A gel polymer electrolyte composition and a battery cell are manufactured in the same manner as in Example 1 except that pentaerythritol tetracrylate (PETTA), a tetrafunctional compound, is used as the polymer precursor of the gel polymer electrolyte composition, and the electrolyte and the polymer composition are mixed in a weight ratio of 98:2.

### Comparative Example 2 (Bifunctional Polymer)

A gel polymer electrolyte composition and a battery cell are manufactured in the same manner as in Example 1 except that polycaprolactone diacrylate, a bifunctional compound, is used as the polymer precursor of the gel polymer electrolyte composition, and the electrolyte and the polymer composition are mixed in a weight ratio of 96:4.

### Evaluation Example 3: Evaluation of Cycle-life Characteristics

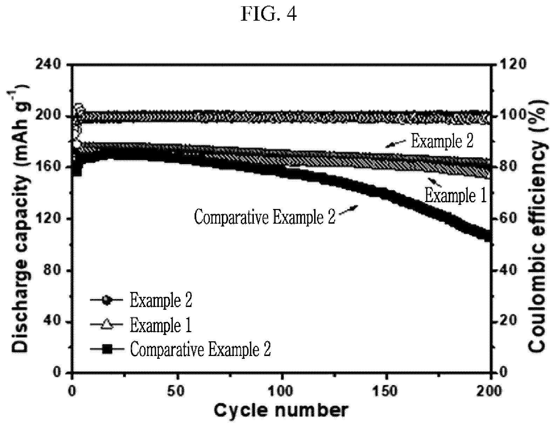

The battery cells according to Examples 1 and 2 and Comparative Example 2 are subjected to initial charge and discharge and then, subsequent cycles in the same manner as in Evaluation Example 2. Then, the cells are measured with respect to discharge capacity during the 200 cycles to measure a ratio discharge capacity at each cycle to initial discharge capacity, which is used to evaluate capacity retention, and the results are shown in FIG. 4.

Referring to FIG. 4, Comparative Example 2 exhibits that the capacity decreases from about 50 cycles and reaches very low capacity retention of 50% or so at the 200^{th} cycle, but Examples 1 and 2 exhibit satisfactory capacity retention. Through this, compared to Comparative Example 2, in which a bifunctional polymer is applied to a gel polymer electrolyte, Examples 1 and 2, in which a three or higher-functional polymer is applied to a gel polymer electrolyte, exhibit improved cycle-life characteristics.

### Comparative Example 3 (Change of Electrolyte)

A gel polymer electrolyte composition and a battery cell are manufactured in the same manner as in Example 1 except that an electrolyte is prepared by adding 5 parts by volume of fluoroethylene carbonate and 3 parts by volume of vinylene carbonate based on 100 parts by volume of a solvent of ethylene carbonate, ethylmethyl carbonate, and diethyl carbonate in a volume ratio of 3:5:2 as the electrolyte component of the gel polymer electrolyte composition and dissolving LiPF₆ lithium salt at a concentration of 1.15 M.

### Comparative Example 4 (Change of Electrolyte)

A gel polymer electrolyte composition and a battery cell are manufactured in the same manner as in Example 1 except that an electrolyte is prepared by dissolving LiTFSI lithium salt at a concentration of 0.8 M and LiDFOB lithium salt at a concentration of 0.2 M in a mixed solvent of ethylmethyl carbonate and fluoroethylene carbonate in a volume ratio of 3:1.

### Evaluation Example 4: Evaluation of Cycle-life Characteristics

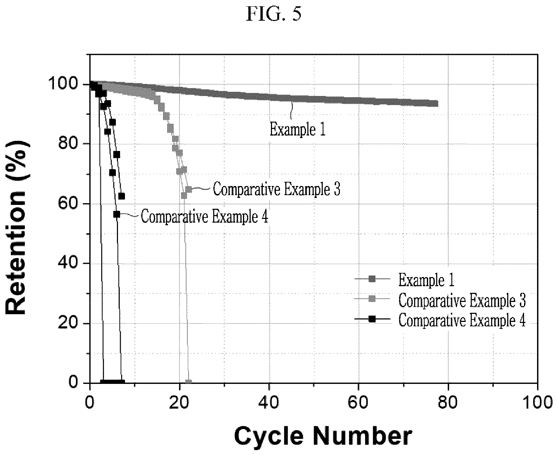

The battery cells of Example 1 and Comparative Examples 3 and 4 are initially charged and discharged in the same manner as in Evaluation Example 2. Then, the cells are about 80 cycles charged and discharged to calculate a ratio of discharge capacity at each cycle to initial discharge capacity, which is used to evaluate capacity retention, and the results are shown in FIG. 5.

Referring to FIG. 5, Example 1 exhibits capacity retention of 90% or more and thus excellent cycle-life characteristics, but Comparative Example 3, whose electrolyte composition is changed, exhibits sharply dropped capacity at the 20^{th} cycle, and Comparative Example 4 using another electrolyte composition exhibits sharply dropped capacity before the 10^{th} cycle and thus significantly inferior cycle-life characteristics, which confirms that Comparative Examples 3 and 4 are not appropriate as a gel polymer electrolyte component.

### Example 3 (Change in Polymer Amount Ratio)

A gel polymer electrolyte composition and a battery cell are manufactured in the same manner as in Example 1 except that the electrolyte and the polymer precursor are mixed in a weight ratio of 99:1.

### Example 4 (Change in Polymer Amount Ratio)

A gel polymer electrolyte composition and a battery cell are manufactured in the same manner as in Example 1 except that the electrolyte and the polymer precursor are mixed in a weight ratio of 95:5.

### Evaluation Example 5: Evaluation of Cycle-life Characteristics

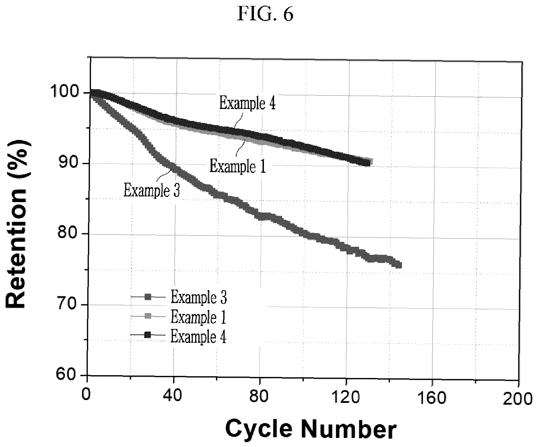

The battery cells according to Examples 1, 3, and 4 are subjected to initial charge and discharge and then, subsequent cycles in the same manner as in Evaluation Example 2. After performing about 120 cycles, a ratio of discharge capacity at each cycle to initial discharge capacity is calculated to evaluate capacity retention, and the results are shown in FIG. 6.

Referring to FIG. 6, Example 3 including 1 wt% of a polymer exhibits capacity retention of 80% or so at the 120^{th} cycle, Example 1 including 3 wt% of a polymer and Example 4 including 5 wt% of a polymer exhibit capacity retention of 90% or so, which all realize higher cycle-life characteristics than the comparative examples.

### Evaluation Example 6: Viscosity Evaluation of Gel Polymer Composition

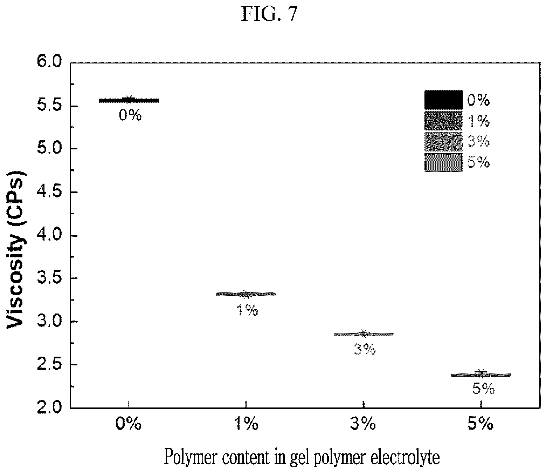

Example 3 having a polymer precursor content of 1 wt%, Example 1 having a polymer precursor content of 3 wt%, Example 4 having a polymer precursor content of 5 wt%, and Reference Example 1, to which an electrolyte alone is applied without the polymer, are measured with respect to viscosity of each gel polymer electrolyte composition before injection to a battery case, and the results are shown in FIG. 7.

Herein, viscosity is measured by using a Brookfield viscometer (Ametek Inc.) with 62 spindles at 5 rpm. Herein, the viscosity is measured by using mineral oil (KS1000 & 5000) as a reference solvent for calibrating the viscometer.

Referring to FIG. 7, as a polymer content increases from 0% to 5%, conductivity of the gel polymer electrolyte composition actually decreases. If the gel polymer electrolyte composition has higher viscosity than an electrolyte due to the polymer component, the gel polymer electrolyte composition is difficult to inject into a battery case, which may cause a problem in processability, but the gel polymer electrolyte composition according to an embodiment exhibits lower viscosity than that of the electrolyte (polymer 0%) included therein and thus secures satisfactory processability without causing the problem in the injection process and in addition, has an advantage of still applying a conventional non-aqueous electrolyte battery manufacturing process.

Although the preferred embodiments have been described in detail above, the scope of the present invention is not limited thereto. In addition, various modifications and improvements made by those skilled in the art using the basic concept defined in the claims should also be understood as falling within the scope of the present invention.

**[Description of Symbols]**

| | | | |
|---|---|---|---|
| 100: | rechargeable lithium battery | 112: | negative electrode |
| 113: | separator | 114: | positive electrode |
| 120: | battery case | 140: | sealing member |

## Claims

1. A rechargeable lithium battery, comprising
a positive electrode, a negative electrode, a separator between the positive electrode and the negative electrode, and a gel polymer electrolyte,
wherein the positive electrode includes a positive electrode active material including a lithium cobalt-based oxide,
the gel polymer electrolyte includes a polymer and an electrolyte solution,
the polymer has three or more functional groups but not include an ether group,
the electrolyte includes a lithium salt and a solvent, and the lithium salt includes lithium difluoro(oxalato)borate and LiBF₄.

2. The rechargeable lithium battery as claimed in claim 1, wherein
in the polymer of the gel polymer electrolyte, the functional group includes an ester group, a carbonate group, or a combination thereof.

3. The rechargeable lithium battery as claimed in claim 1, wherein
the polymer in the gel polymer electrolyte is derived from derived from trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, or a combination thereof.

4. The rechargeable lithium battery as claimed in claim 1, wherein
in the gel polymer electrolyte, a weight ratio of the polymer and the electrolyte is 1:99 to 10:90.

5. The rechargeable lithium battery as claimed in claim 1, wherein
a concentration of the lithium salt in the electrolyte solution of the gel polymer electrolyte is 0.3 M to 4 M.

6. The rechargeable lithium battery as claimed in claim 1, wherein
in the electrolyte solution of the gel polymer electrolyte, a molar ratio of the lithium difluoro(oxalato)borate and the LiBF₄ is 20:80 to 80:20.

7. The rechargeable lithium battery as claimed in claim 1, wherein
in the electrolyte solution of the gel polymer electrolyte, the solvent is a carbonate-based solvent, ester-based solvent, or a combination thereof.

8. The rechargeable lithium battery as claimed in claim 1, wherein
in the electrolyte solution of the gel polymer electrolyte, the solvent includes fluoroethylene carbonate.

9. The rechargeable lithium battery as claimed in claim 8, wherein
the fluoroethylene carbonate is included in an amount of 5 volume% to 50 volume% based on 100 volume% of the solvent.

10. The rechargeable lithium battery as claimed in claim 1, wherein
in the positive electrode, the lithium cobalt-based oxide is represented by Chemical Formula 1:
[Chemical Formula 1] LiₐCoₓM¹_{y}M²_{1-x-y}O₂
wherein, in Chemical Formula 1 0.9 ≤ a ≤ 1.8, 0.7 ≤ x ≤ 1, 0 ≤ y ≤ 0.3, and M¹ and M² are each independently Al, B, Ba, Ca, Ce, Cr, Cu, F, Fe, Mg, Mn, Mo, Nb, P, S, Si, Sr, Ti, V, W, Zr, or a combination thereof.
